## Europäisches Patentamt
## European Patent Office
## Office européen des brevets

(11) Publication number: **0 050 945**
**B1**

# (12) EUROPEAN PATENT SPECIFICATION

(45) Date of publication of patent specification: **11.09.85**

(21) Application number: **81304825.3**

(22) Date of filing: **16.10.81**

(51) Int. Cl.⁴: **F 16 D 65/56**

### (54) A self adjusting drum brake actuator.

(30) Priority: **29.10.80 GB 8034840**

(43) Date of publication of application:
**05.05.82 Bulletin 82/18**

(45) Publication of the grant of the patent:
**11.09.85 Bulletin 85/37**

(84) Designated Contracting States:
**DE FR GB IT**

(56) References cited:
**GB-A- 965 262**
**GB-A- 1 513 740**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Hodkinson, Harold
54 St. Martins Road
Finham Coventry (GB)**

Courier Press, Leamington Spa, England.

## Description

This invention relates to self adjusting drum brake actuators and particularly to the kind of actuator in which the return movement of the brake shoe after application of the brake is limited by an elongating adjuster mechanism housed in the actuator.

Such brake actuators, according to the precharacterizing part of claim 1, are described in the specification of British Patent 965 262 (equivalent to US Patent 3 068 964) there also being provided an actuator body having a plunger in its bore to actuate a brake shoe, the plunger having a cup-like cavity and an adjuster in the cavity operating to vary the plunger length to maintain constant brake clearance, the adjuster comprising three co-axial telescopic parts including a nut slidable in the plunger cavity, a sleeve located in the nut and a tappet in the sleeve for bearing against the brake shoe, the telescopic parts being relatively rotatable and the nut and the sleeve are interconnected by screw-thread means.

A brake actuator comprising abutment means to limit axially outward movement of the telescopic parts is described in GB—A—1513740.

A problem associated with this kind of actuator is that while it is desirable to obtain a maximum amount of adjustment from a minimum original length severe limitations are imposed when utilising screw-thread means such as are incorporated in the earlier constructions.

According to the present invention, therefore, there is provided a self-adjusting drum brake actuator which comprises an actuator body having a plunger therein movable in a bore in the body to thrust a brake shoe lining against the internal surface of a brake drum, the plunger has a cup-like cavity the open end of which projects towards the mouth of the bore, an adjuster located in the cavity and which operates to vary the overall length of the plunger to maintain a substantially constant clearance between the linings and the drum, said adjuster comprises at least three co-axial telescopic parts including a nut slidable within the plunger cavity, a sleeve located in the nut, and a tappet located in the sleeve and which in use bears against a brake shoe, said parts being relatively rotatable, said nut and said sleeve being connected one-to-another by screw thread means and the nut having an external reversible screw thread thereon engageable with a pawl projecting inwardly from the body and having an internal non-reversible threaded connection with the external surface of the sleeve, whereby the sleeve has an internal non-reversible threaded connection with the tappet and the inner two parts each have a respective abutment thereon to limit the axially outward telescopic movement of its respective part.

The invention will be described by way of example and with reference to the accompanying drawings in which:—

Fig. 1 is an elevation of a drum brake assembly incorporating an actuator according to this invention;

Fig. 2 is a section through an actuator according to this invention and taken on the line II—II of Fig. 1; and

Fig. 3 is a detailed section taken on the line III—III of a pawl engaging a helical ratchet thread as is utilised on the external surface of the nut in Fig. 2.

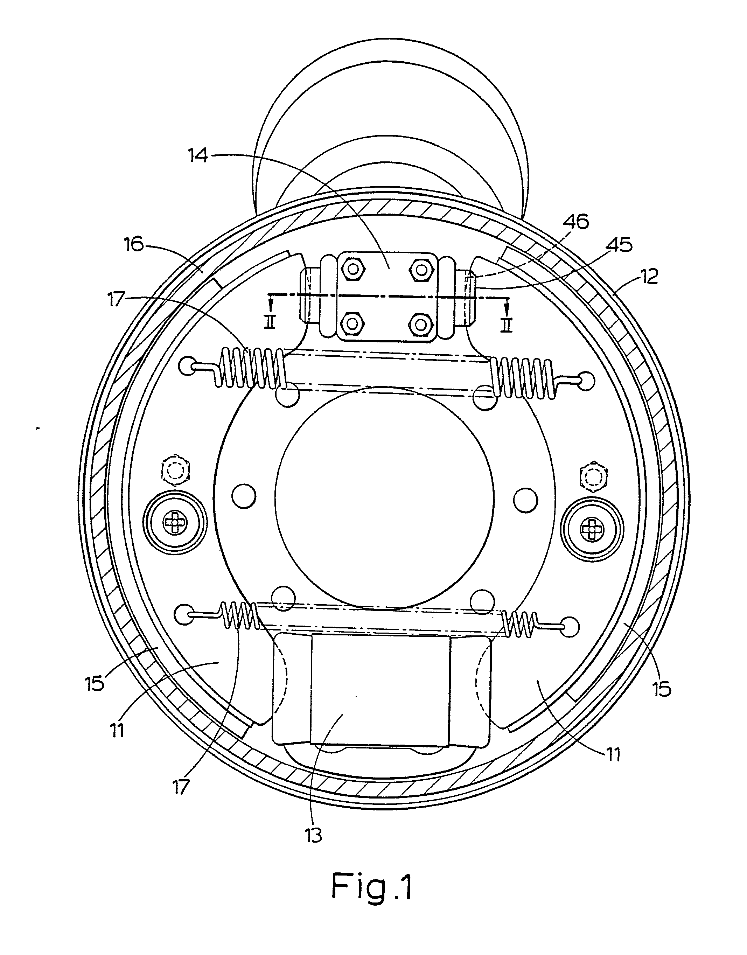

An internal shoe drum brake assembly is illustrated in Fig. 1 in which a pair of brake shoes 11 are mounted on a back plate 12. A hydraulic actuator 13 is located between one pair of adjacent ends of the brake shoes and a mechanical wedge actuator 14 is mounted between the other pair of adjacent ends. When the brakes are applied either hydraulically or mechanically the brake shoe linings 15 are thrust against the internal surface of the brake drum 16. Such a brake drum is described in detail in our British Patent Specification 1 513 740 and in order to maintain a substantially constant clearance between the brake linings 15 and the internal surface of the brake drum 16 the actuator 14 is made self adjusting according to the herein disclosed invention. After application of the brakes the brake shoe linings 15 are pulled away from the internal surface of the drum 16 by a pair of pull-off springs 17.

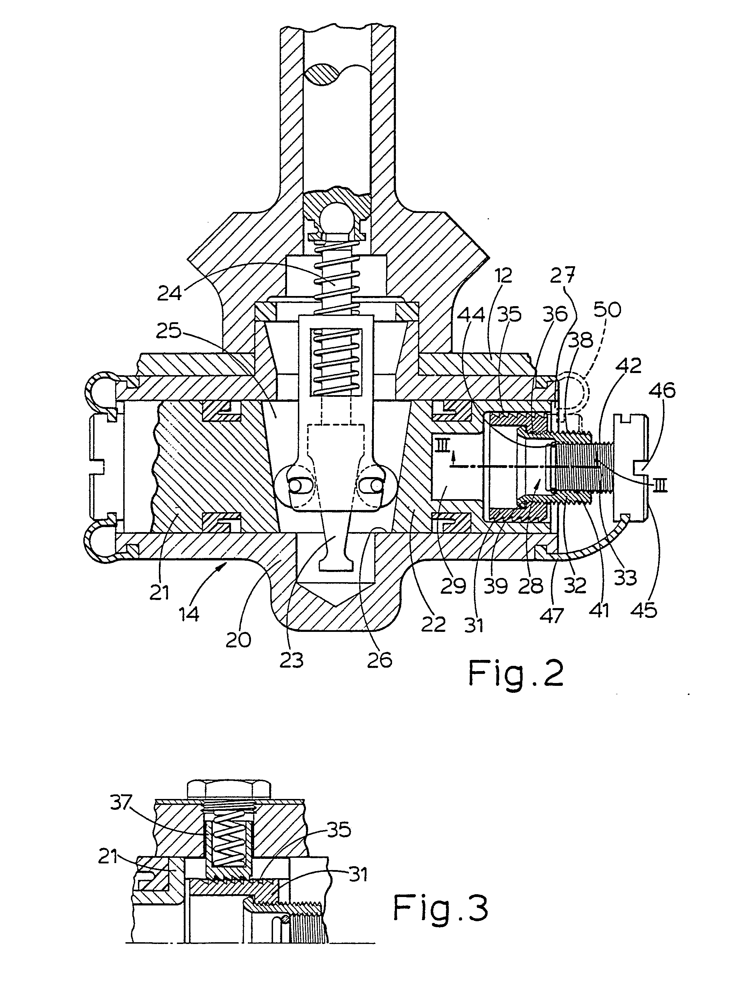

The drum brake mechanical actuator 14 is illustrated in Fig. 2 and comprises pistons 21 and 22 which are mechanically actuated by a wedge 23 connected by rod 24 to an air cylinder (not shown), or are hydraulically actuated by the application of hydraulic pressure in the chamber 25. The pistons 21 and 22 are slidable in a bore 26 in the actuator body 20.

The piston 22 is cup-shaped with the open end of the cup projecting towards the mouth 27 of the bore 26.

A telescopic adjuster 28 is housed within the cavity 29 of the cup-shaped piston 22 and comprises an outer nut 31, a cylindrical sleeve 32, and a tappet 33. The tappet 33 acts against a brake shoe 11 to thrust the shoe 11 against the internal surface of drum 16. The adjuster 28 acts to limit the return movement of the brake shoes 11 after application of the brakes and thereby to maintain a substantially constant clearance between the linings 15 and the internal surface of the drum 16.

The adjuster 28 has three co-axial parts, as described above. The nut 31 is axially slidable in the piston cavity 29 and has a helical ratchet 35 formed on its outer surface. The ratchet teeth engage a spring loaded pawl 37 (see Fig. 3) housed in the wall of the actuator body 20 and projects through an axial slot in the wall of the piston 22. The engagement between the pawl 37 and the teeth 35 forms a one-way clutch that allows the nut 31 to slide axially towards the shoe 11 relative to the body 20, but not to slide in the reverse direction. The pitch of teeth 35 is equal to the desired clearance between the brake shoe linings 15 and the drum 16. Also the helical ratchet 35 forms a reversible screw threaded engagement with the pawl 37 so that the application of the axial return load of the pull-off springs 17 causes the nut 31 to rotate on the ratchet thread relative to the piston 22.

The internal surface of the nut 31 has a non-reversible screw thread 36 thereon that engages a like thread 38 on the external surface of the sleeve 32. The sleeve 32 has an abutment 39 at its inner end which abuts an internal shoulder on the thread 36 to limit the axial movement towards the shoe 11 of the sleeve 32 relative to the nut 31.

The internal surface of the sleeve 32 has an internal screw thread 41 of the same form as the threaded engagement between the sleeve 32 and nut 31. The internal thread 41 engages with a like thread 42 on the external surface of the tappet 33. The tappet 33 has an abutment 44 at its inner end to limit the axial movement towards the shoe 11 of the tappet 33 relative to the sleeve 32. The outer face 45 of the tappet 33 has a slot 46 therein that engages with the web of the brake shoe 11.

A rubber boot 47 surrounds the tappet 33 and snaps over the mouth 27 of the body 20 to prevent the entry of dirt into the adjuster.

The adjuster works in the following manner:—

With the brake in an 'as new' condition the nut 31, sleeve 32 and tappet 33 are fully telescoped together and sit within the piston cavity 29. The outline of the adjuster in this position is shown by dotted lines 50. When the brakes are applied the piston 22 moves rightwards and takes the nut 31 with it. The pawl 37 rides over the teeth 35 allowing the nut 31 to slide rightwards with the piston relative to the body 20.

(a) If there is no excessive wear in the brake linings, the pawl 37 rides up the lead slope of the ratchet 35 but will not completely disengage from its initial tooth engaging position. When the brakes are released the load in the brake pull-off springs 17 causes the pawl to re-engage with the trough of the ratchet teeth.

(b) If there is excess wear in the brake linings the pawl 37 will ride up the teeth 35 and disengage from their initial position and re-engage with a new set of teeth, whose relative position on the nut is determined by the amount of rightwards movement of the nut. When the brakes are released the load in the pull-off springs will first cause the pawl 37 to re-engage with the trough of the newly engaged ratchet teeth 35, and will then cause the nut 31 to rotate within the cavity 29 until the nut 31 bottoms on the piston.

The direction of the helix of the teeth 35 is such that the rotation of the nut 31 causes one or both of the sleeve 32 and tappet 33 to be screwed out of the fully telescopied state and displaced axially towards the brake shoe. This is because of the like screw threaded engagement between the nut 31 and sleeve 32, and between the sleeve 32 and tappet 33, the tapper 33 being prevented from rotation by its engagement with the brake shoe. When the tappet 33 is displaced axially rightwards the overall length of the piston increases as the nut 31 rotates, thereby limiting the return movement of the brake shoe on release of the brakes.

The maximum adjustment is reached when the tappet 33 and sleeve 32 reach the positions illustrated in Fig. 2.

## Claim

Self adjusting drum brake actuator comprises an actuator body (20) having a plunger (22) therein movable in a bore (26) in the body (20) to thrust a brake shoe lining (15) against the internal surface of a brake drum (16), the plunger (22) has a cup-like cavity (29) the open end of which projects towards the mouth (27) of the bore (26), an adjuster (28) located in the cavity (29) and which operates to vary the overall length of the plunger (22) to maintain a substantially constant clearance between the linings (15) and the drum (16), said adjuster (28) comprises at least three co-axial telescopic parts (31, 32, 33) including a nut (31) slidable within the plunger cavity (29), a sleeve (32) located in the nut, and a tappet (33) located in the sleeve and which in use bears against a brake shoe (11), said parts (31, 32, 33) being relatively rotatable, said nut (31) and said sleeve (32) being connected one-to-another by screw thread means (36, 38) and the nut (31) having an external reversible screw thread (35) thereon engageable with a pawl (37) projecting inwardly from the body (20) and having an internal non-reversible threaded connection (36, 38) with the external surface of the sleeve (32), characterized in that the sleeve (32) has an internal non-reversible threaded connection (41, 42) with the tappet (33) and the inner two parts (32, 33) each have a respective abutment (39, 44) thereon to limit the axially outward telescopic movement of its respective part.

## Patentanspruch

Selbstnachstellende Trommelbremsenbetätigungsvorrichtung mit einem Betätigungsvorrichtungsgehäuse (20), bei dem ein Kolben (22) in einer Bohrung (26) in dem Gehäuse (20) darin beweglich ist, um einen Bremsbackenbelag (15) gegen die Innenfläche einer Bremstrommel (16) zu drücken, wobei der Kolben (22) einen becherähnlichen Hohlraum (29) hat, dessen offenes Ende zu dem Eingang (27) der Bohrung (26) hin gerichtet ist, mit einer Nachstelleinrichtung (28), die in dem Hohlraum (29) angeordnet ist und arbeitet, um die Gesamtlänge des Kolbens (22) zu verändern, um ein im wesentlichen konstantes Spiel zwischen den Belägen (15) und der Trommel (16) aufrechtzuerhalten, wobei die Nachstelleinrichtung (28) mindestens drei koaxiale Teleskopteile (31, 32, 33) aufweist, die eine in dem Kolbenhohlraum (29) verschiebbare Mutter (31), eine in der Mutter angeordnete Hülse (32) und einen Zapfen (33) einschließen, der in der Hülse angeordnet ist und in Gebrauch an einer Bremsbacke (11) anliegt, wobei die Teile (31, 32, 33) relativ zueinander drehbar sind, die Mutter (31) und die Hülse (32) durch eine Schraubengewindeeinrichtung (36, 38) miteinander verbunden sind und die Mutter (31) ein äußeres Umkehrschraubengewinde (35) daran hat, das mit einer Sperrklinke (37) in Eingriff steht, die von dem Gehäuse (20) aus nach innen ragt und eine innere, nicht umkehrbare Schraubverbindung (36, 38) mit der äußeren Oberfläche der Hülse (32) hat, dadurch gekennzeichnet, daß die Hülse (32) eine innere, nicht umkehrbare Schraubverbindung (41, 42) mit dem Zapfen (33) hat und jedes der beiden inneren Teile (32, 33) einen jeweiligen Anschlag (39, 44) daran hat, um die axiale Auswärtsteleskopbewegung des jeweiligen Teiles zu begrenzen.

**Revendication**

Bloc de commande à réglage automatique pour frein à tambour, comprenant un corps de bloc de commande (20) dans lequel est disposé un piston (22) qui est mobile dans un alésage (26) ménagé dans ce corps (20) de manière à appliquer une garniture de patin de frein (15) contre la surface intérieure d'un tambour de frein (16), ce piston (22) présentant une cavité en forme de cuvette (29) dont l'extrémité ouverte fait saillie en direction de l'entrée (27) de l'alésage (26), un dispositif de réglage (28) est logé dans la cavité (29) et fonctionne de manière à faire varier la longueur totale du piston (22) en vue de maintenir un jeu sensiblement constant entre les garnitures (15) et le tambour (16), ce dispositif de réglage (28) comportant au moins trois parties coaxiales télescopiques (31, 32, 33) comprenant un écrou (31) qui peut coulisser à l'intérieur de la cavité de piston (29), un manchon (32) qui est logé dans cet écrou, et un poussoir (33) qui est logé dans ce manchon et qui, en service, s'appuie contre un patin de frein (11), ces parties (31, 32, 33) pouvant tourner les unes par rapport aux autres, ledit écrou (31) et ledit manchon (32) étant reliés l'un à l'autre à l'aide de moyens à filetage hélicoïdal (36, 38) et l'écrou (31) présentant un filetage hélicoïdal extérieur réversible (35) au contact duquel peut venir un cliquet (37) qui fait saillie à partir du corps (20) vers l'intérieur, et présentant une jonction filetée intérieure non réversible (36, 38) avec la surface extérieure du manchon (32), caractérisé en ce que le manchon (32) présente une jonction filetée intérieure non réversible (41, 42) avec le poussoir (33), et en ce que les deux parties intérieures (32, 33) présentent chacune une butée respective (39, 44) permettant de limiter le mouvement axial télescopique de sa partie correspondante vers l'extérieur.

0 050 945

Fig.1

Fig.2

Fig.3